# EUROPEAN PATENT APPLICATION

(11) **EP 0 824 858 A1**
(43) Date of publication of application: **25.02.1998**
(21) Application number: 97306049.4
(22) Date of filing: 08.08.1997
(51) Int. Cl.: A01J 5/017

(54) **Cluster support and guidance system for a milking machine**

(30) Priority: 13.08.1996 GB 9616977
(71) Applicant: Gascoigne Melotte (UK) Ltd, Basingstoke, Hampshire RG24 8PP (GB)
(72) Inventor: Hawkins, Michael Francis, Reading, Berkshire (GB); Tyson, John Joseph, Basingstoke, Hampshire (GB)
(74) Representative: Wolff, Francis Paul

(57) **Abstract**

A teat cup cluster support and guidance system for a milking machine for goats comprises a static support (1) fixed to a kerb (2) in a milking parlour, a clawpiece-carrying arm (3) hinged to the support and movable from an operating position to a parking position through an intermediate washing position, parking means for urging the arm to the parking position in which the teat cup assembly (8) is parked upright by the kerb, a tube guide assembly (5) fixed to the support, a first releasable latch (6) for holding the clawpiece-carrying arm in its operating position, but releasable to allow the arm to be moved to the parking position on cessation of milk flow, a switch (17) for automatically starting the milking vacuum when the arm reaches its operating position, and a second releasable latch (7) for holding the arm in the washing position.

## Description

This invention relates to a teat cup cluster support and guidance system for a milking machine for ruminant animals. More specifically, it relates to a system whereby the teat cup cluster may be moved simply and hygienically from a first operating position to a second parking position on the cessation of milking. The parking position can be convenient, hygienic and ergonomically efficient.

In milking machines generally, a number of teat cups are connected by flexible tubes to a source of vacuum, which is pulsed to stimulate the flow of milk from the udder of an animal, with delivery tubes to transport the milk from the animal to a storage and processing location. The requisite number of teat cups for one animal connected by short pulsation tubes and short milk tubes to a manifold, known as a clawpiece, is referred to as a cluster. At the end of the milking operation, it is desirable to provide means for removing the cluster from the animal, and for hygienic reasons, it is desirable that the cluster should not come into contact with the floor of the milking parlour. A known system, used with large animals such as cows, involves suspension of the cluster and its associated vacuum and milk lines from an overhead location in the parlour, and when the milking vacuum has ceased and the cluster falls away from the udder, it is lifted and swings free above the floor of the parlour. Such a system is unsuitable for smaller animals, such as goats and sheep, for a number of reasons. For instance, there is less clearance between the udder and the floor of the parlour. Furthermore, the milking stations within the parlour will be closer together with the consequent risk of entanglement of the suspension means, and of the short and long pulse tubes and milk tubes; and the density of the hanging wires and tubes makes access to the animals difficult. Moreover, since there are only two teat cups in a cluster for these smaller animals, on longer tubes, rather than the four on shorter tubes in the cluster used for cows, the hanging cluster is less stable and there is a greater risk of twisting of the lines.

There is consequently an established need for some means for supporting the cluster and its associated vacuum supply and milk delivery lines before and after the milking of each animal, and for ensuring that the teat cups do not fly about or come into contact with the floor of the parlour when moving into a parking position. Such a system has not previously been commercially available for small ruminant animals.
Furthermore, the operator needs to be able to present two teat cups to the udder and simultaneously switch on the milking vacuum, and this invention seeks to provide a convenient and ergonomic solution to this problem.

The present invention addresses the problem of providing such a system, and especially for use in milking parlours for smaller animals, of the type with floors on two levels, having a lower portion where the operator can stand, and a higher portion on which the animals to be milked will stand, with a kerb between them.

The present invention concerns aspects of the cluster support and guidance system described below. The scope of the invention extends to all novel aspects of the system whether individually or in combination with any of the other features disclosed herein.

According to the invention, a cluster support and guidance system comprises some or all of the elements and features disclosed in the following description.

In particular, in a milking machine for ruminant animals, of the kind utilising a cluster of teat cups connected by flexible pulsation tubes and milk tubes to a clawpiece, cluster support apparatus may comprise a fixed support for holding the teat cups in a parking position, guides for the said tubes associated with each teat cup, and means for drawing the tubes through the guides on cessation of milking, to park the teat cups on the support.

The means for drawing the tubes through the guides may comprise means for drawing the clawpiece to which the tubes are attached, thereby to draw the tubes. Said means may comprise an arm that carries the clawpiece and is pivoted to the fixed support, together with means for moving the arm; and such means for moving the arm may include springs or the like, or vacuum power.

Springs provide a simple means to bias or urge the arm to a position corresponding to the parking position of the teat cups. A latch may be provided to hold the arm in its operative or milking position, and such latch can, if desired, be automatically released on cessation of milking, or alternatively the latch can be released under the control of the milking machine operator.

Preferably, the guides for the tubes allow removal of the tubes from the guides without disconnecting them from the teat cup and clawpiece, so that the teat cups can be removed from the support apparatus for cleaning at an adjacent washing station. Normally, the respective positions of the two tubes will be permanently defined with relation to the teat cup assembly, for example the pulsation tube vertically above the milk tube, and by arranging the respective tube guides in a similar orientation at the parking position, the teat cups can be parked in a substantially upright position, ready for the operator to pick up and use, and avoiding milk spillage immediately after removal from a milked animal.

According to a specific embodiment of this invention, there is provided a teat cup cluster support and guidance system for a milking machine for ruminant animals comprising
a static support member adapted for fixing to a kerb in a milking parlour,
a clawpiece-carrying member, hinged to the static member and movable from an operating position to a parking position, preferably through an intermediate washing position,
parking means for urging the clawpiece-carrying member to said parking position,
a tube guide assembly fixed to the static member,
a first releasable latch means for holding said clawpiece-carrying member in said operating position, and releasable to allow said clawpiece-carrying member to be moved to said parking position on cessation of milk flow,
optionally a second releasable latch means for holding said clawpiece-carrying member in said washing position, and
a plurality of teat cups, each connected to said clawpiece by a respective short pulsation air tube and short milk tube.

The invention will be further described with reference to the exemplary embodiment illustrated in the accompanying drawings, in which:

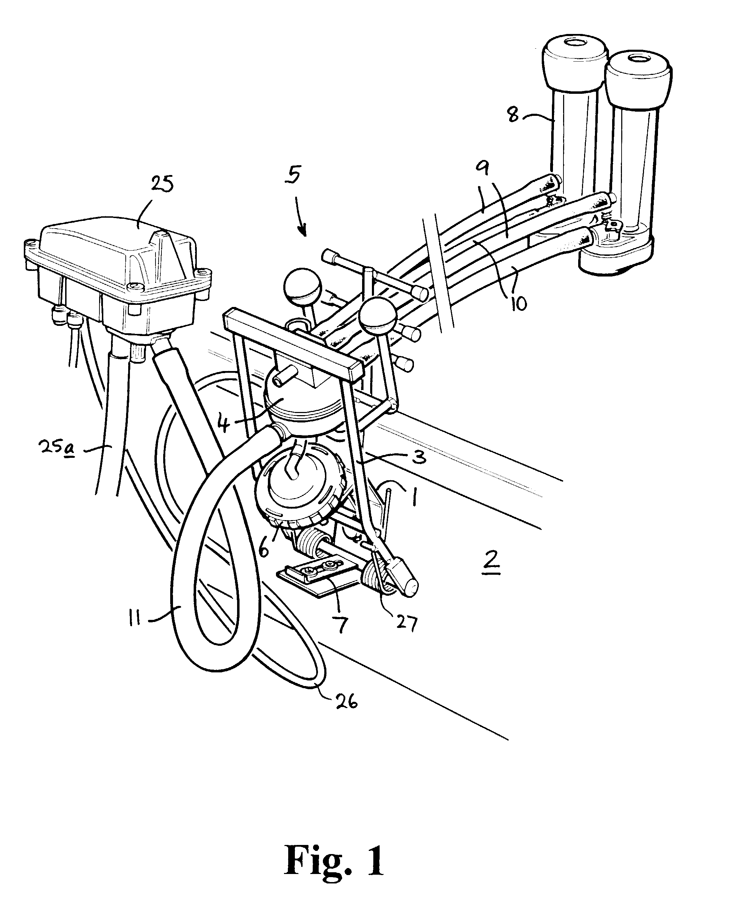

Fig. 1 is a perspective view of a cluster support and guidance system in its operating position;
Fig. 2 is a perspective view of the system in its parked position;
Fig. 3 is a perspective view of the system in the washing position;
Fig. 4 is a view of the support, without the teat cluster and its associated lines;
Fig. 5 is a side elevation of the support shown in Fig. 4.

Referring now to the drawings, a static member 1 is adapted to be fixed, such as by bolts, to a kerb 2 of a milking parlour. A clawpiece support arm 3 is hinged to the lower end of the static member 1 and serves to support a clawpiece 4. A tube guide assembly 5 is fixed at the upper end of a static member 1 and serves to hold, support and guide tubes connecting the clawpiece to a pair of teat cups 8. Each cup is connected to the clawpiece by a respective short pulsation tube 9 and short milk tube 10. The teat cup is of known type, for instance that described in EP-A-0717927.

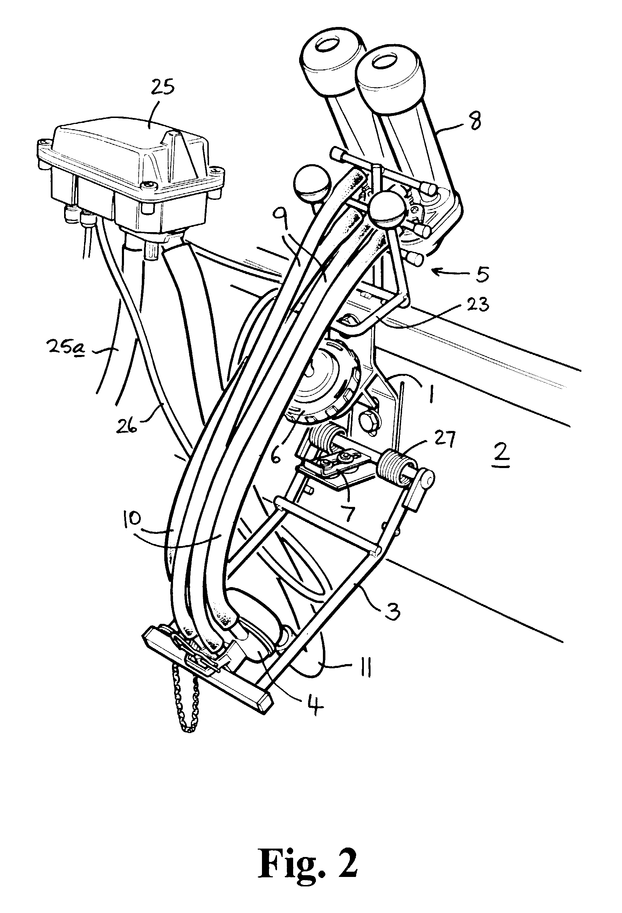

The clawpiece 4, held to the clawpiece support arm by some suitable means, such as a retaining pin as shown in Figs. 2, 3 and 4, is of generally conventional construction and is provided with a long pulsation tube 12 for connection to a source of pulsed vacuum, and to a long milk tube 11 for connection to a milk collection system.

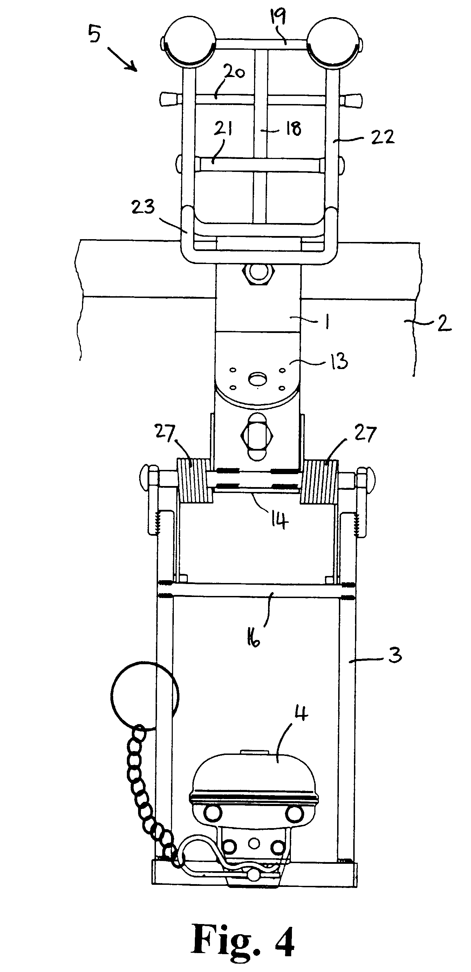

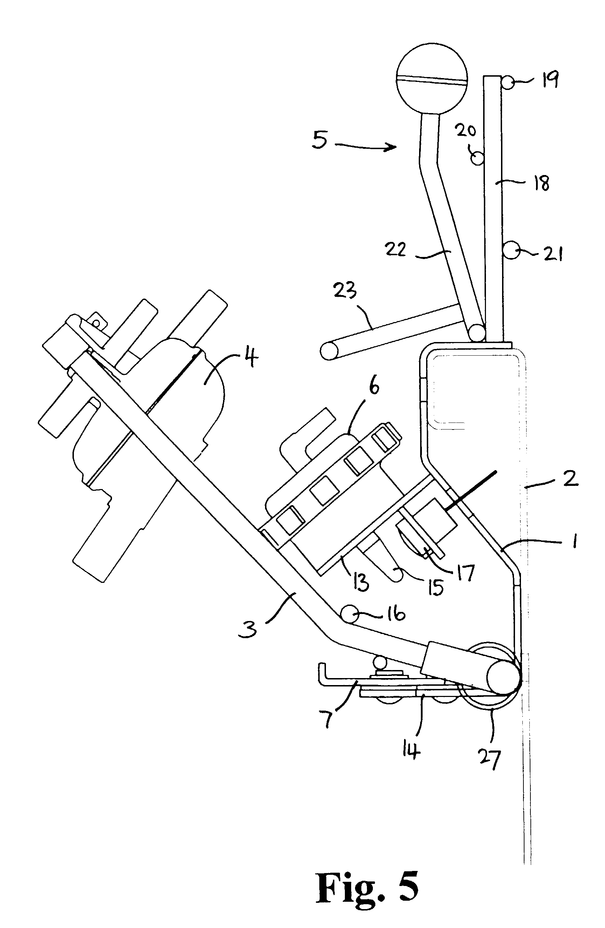

In a preferred embodiment, which will be seen more clearly from Figs. 4 and 5, the static member 1 is provided with an upper bracket 13 and a lower bracket 14. A first releasable vacuum controlled latch means 6 is provided on the upper bracket, and a second releasable manually operated latch means 7 is provided on the lower bracket. The first latch means 6 is so located on the upper bracket that, when the clawpiece support arm is lifted into the operating position to begin the milking operation, a spring loaded tongue 15 of the latch will be extended behind a cross member 16 of the clawpiece support arm, thereby preventing rotation of the latter away from the operating position. When the clawpiece support is raised into the operating position, the cross member will operate a switch 17 to initiate supply of vacuum through supply tube 11 to the clawpiece and hence via tubes 10 to the teat cup assembly 8, and at the same time release the vacuum that had previously held latch tongue 15 back against its spring pressure. The second latch means 7 on the lower bracket serves to support the clawpiece support arm in the washing position as will be described in more detail later.

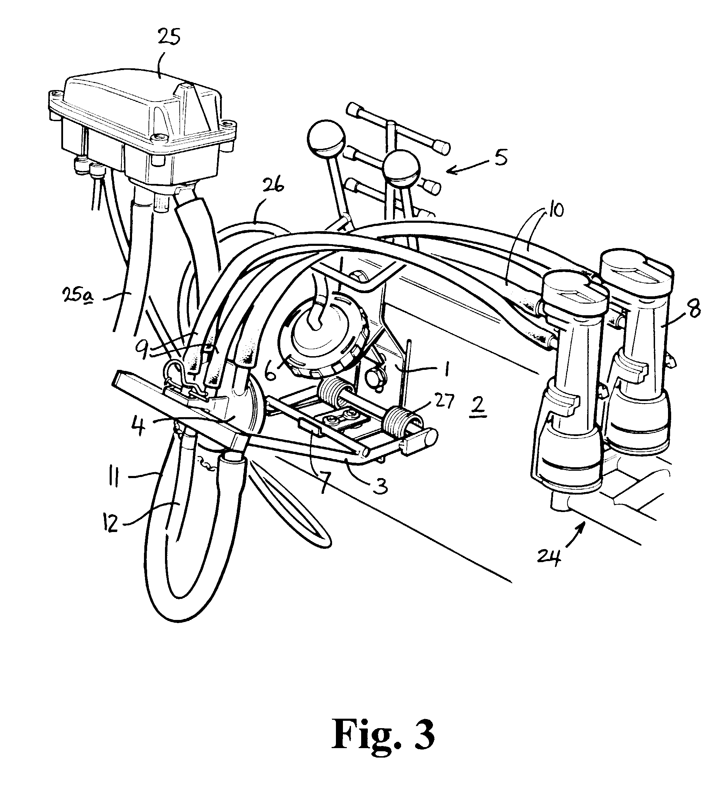

The tube guide assembly 5 serves to prevent twisting of the lines 9 and 10 and to support the teat cup assembly in the parking position. In the illustrated embodiment, it comprises an upright member 18, transverse to which are upper, intermediate and lower transverse members 19, 20 and 21. The assembly 5 will hereinafter be referred to as the tree. A first U-shaped member 22 is fixed to the top of the static member 1, so that its upwardly-directed limbs are located close behind the tree, but at a sufficient distance to permit lines 9 and 10 to pass through the space between the tree and the member 22 when the teat cups are to be moved to the washing position, as shown in Fig. 3. A second U-shaped member 23 is fixed by the ends of its limbs near the lower end of the first U-shaped member 22, on the side furthest from the teat cup assembly, in order to provide a rest for the short milk tubes 10 when the assembly is in the parked position (Fig. 2).

When the apparatus is to be cleaned at the end of a milking session, the clawpiece support arm 3 is placed in the intermediate position, as shown in Fig. 3, with the cross member 16 supported on the lower bracket 14 by horizontally-slidable second latch means 7. The pulsation and milk tubes 9, 10 can be removed from between the tree and the U-shaped member 22 which enables the teat cup assembly 8 to be transferred to a washing station 24 for supply of water to clean the teat cups and clean and flush the system.

When milking is to be started, and the animal is in position, the two teat cups 8 are lifted by the operator from this ergonomically efficient parking position and presented to the udder of the animal. This lifts the clawpiece support 3 into the operating position. Pressure of the cross member 15 against the switch 17 actuates the first latch means 6 and initiates supply of vacuum to the clawpiece 4 and hence through tubes 9 to the teat cups. Milk drawn from the udder then is drawn back from the teat cup assembly to the clawpiece through tubes 10, generally being swept by air drawn into the milk discharge chamber through an air bleed valve provided in the base of the teat cup assembly. This portion of the apparatus is generally of a known nature, and the above-mentioned EP-A-0717927 may be referred to for further information.

In the illustrated embodiment, milk from the clawpiece will pass through long milk tube 11 to a control unit 25 and hence through line 25a to a milk collection system. Control unit 25 operates in a manner similar to that known for other milking machines, for instance the Isolator Automatic Cluster Removal system of Gascoigne Melotte.

This control unit incorporates a milk flow sensor which determines when the rate of flow has decreased to an extent sufficient for the milking operation to cease. Alternatively, if the teat cup assembly should drop off through accident, the milk flow sensor can react to suspend operations of the system. In one embodiment, this is achieved by the application of vacuum along line 26 to latch means 6, which will withdraw the tongue 15 against internal spring pressure, allowing the movable clawpiece support member 3 to drop away, urged by torsion springs 27. The control unit may also employ a delay timer and/or a manual control switch.

In the preferred embodiment, the latch means 6 is actuated by the application or removal of vacuum. This is convenient since the vacuum is already supplied in the milking parlour in order to carry out the milking. Alternatively, latch means could be operated by electrical power switched by a signal from the milk flow sensor or from a timer, or manually.

## Claims

1. Cluster support apparatus for a milking machine for ruminant animals, of the kind utilising a cluster of teat cups (8) each connected by flexible pulsation tubes (9) and milk tubes (10) to a clawpiece (4), said support apparatus comprising a fixed support (1,5) for holding the teat cups in a parking position, guide means (5) for the said tubes connected to each teat cup, and means (3,27) for drawing the said tubes through the guides on cessation of milking, whereby to draw the teat cups from a milking position into the parking position.

2. Cluster support apparatus according to claim 1 characterised in that the guide means (5) are integral with the fixed support (1,5).

3. Cluster support apparatus according to claim 1 or claim 2 characterised in that the guide means (5) permanently define the position of the pulsation tube (9) relative to the milk tube (10) of each teat cup assembly (8) at the parking position, whereby the teat cups can be parked in a substantially upright position.

4. Cluster support apparatus according to any one of claims 1 to 3 characterised in that the guide means (5) comprise an upright member (18) to separate the tubes (9,10) of adjacent teat cups (8) and a transverse member (20) to separate the pulsation tube (9) from the milk tube (10) of the same teat cup.

5. Cluster support apparatus according to any one of the preceding claims characterised in that the means for drawing the tubes through the guide means (5) comprise an arm (3) adapted to carry the clawpiece (4) to which the tubes (9,10) are attached, the arm being movable between a milking position corresponding to the milking position of the teat cups (8) and a parking position corresponding to the parking position of the teat cups, and means for moving the arm from its milking position to its parking position whereby to draw the tubes through the guides and thereby to draw the teat cups towards the guides and into their parking position.

6. Cluster support apparatus according to claim 5 characterised by latch means (6) adapted to retain the arm (3) in its milking position, the said latch means being releasable to permit the arm to be moved by biasing means (27) to its parking position.

7. Cluster support apparatus according to claim 6 characterised in that the latch means (6) are releasable by a signal derived from a milk flow sensor.

8. Cluster support apparatus according to claim 6 or claim 7 characterised by a switch (17) operable by movement of the arm (3) into its milking position, adapted to engage the latch means (6) with the arm and to initiate the supply of milking vacuum to the clawpiece (4).

9. Cluster support apparatus according to any one of the claims 5 to 8 characterised by second latch means (7) adapted to retain the arm (3) at an intermediate teat cup washing position between the milking position and the parking position, wherein the guide means (5) for the tubes (9,10) allow removal of the tubes from the guide means without disconnecting them from the teat cups (8) and clawpiece (4), so that the teat cups can be removed from the support apparatus for cleaning at an adjacent washing station.

10. A milking machine for goats, comprising a cluster of teat cups (8) each connected by flexible pulsation tubes (9) and milk tubes (10) to a clawpiece (4), and cluster support apparatus according to any one of the preceding claims, wherein the said fixed support is fixed to the kerb (2) of a milking parlour.
